# EUROPEAN PATENT APPLICATION

(11) **EP 2 290 530 A1**
(43) Date of publication of application: **02.03.2011**
(21) Application number: 10251482.5
(22) Date of filing: 23.08.2010
(51) Int. Cl.: G06F 9/44

(54) **Widget framework**

(30) Priority: 23.08.2009 US 236135 P; 30.04.2010 US 771238
(71) Applicant: Bank of America Corporation, Charlotte, NC 28255 (US)
(72) Inventor: Polakam, Sarabhaiah, Charlotte North Carolina 28255 (US); Borges, Ashwin John, Charlotte North Carolina 28255 (US)
(74) Representative: Jackson, Robert Patrick

(57) **Abstract**

Systems and methods are illustrated that relate to a web application running on a server accessible from the Internet. Aspects of the disclosure relate to the dynamic update of web applications/pages on third-party websites using an AJAX framework. The system may use properties files, business logic, and mapping table to facilitate cross-domain communication of the widget and the web application.

## Description

Aspects of the disclosure relate to web applications running on a server accessible from the Internet. More specifically, aspects of the disclosure relate to the dynamic update of web applications running on third-party websites using an AJAX framework.

Java Management Extensions (JMX) is a known library extension to Sun Microsystem's JAVA programming language. Wikipedia explains that JMX is "a Java technology that supplies tools for managing and monitoring applications, system objects, devices (e. g. printers) and service oriented networks. Those resources are represented by objects called MBeans™ (for Managed Bean). In the API, classes can be dynamically loaded and instantiated."

Nicolas Frankel, a self-proclaimed "Java geek," blogged in June 2009 about various JMX use cases, including using JMX to manage an application's configuration. Frankel explains that "[e]ven though each application has different needs regarding configuration (one needing a initial thread number attribute, the other an URL), every application needs to be more or less parameterized. In order to do this, countless generations of Java developers ... have created two components: [1] the first one is a property file where one puts the name value pairs, [2] the other one is a Java class whose responsibilities are to load the properties in itself and to provide access to the values... This is good and fine for initialization, but what about runtime changes of those parameters? This is where JMX comes in. With JMX, you can now expose those parameters with read/write authorizations. JDK 6 provides you with the JConsole application, which can connect on JMX-enabled applications."

Meanwhile, Oracle is a well-known database vendor. Oracle provides a feature called Oracle Change Notification (OCN) in numerous versions of its database software system. Oracle's documentation explains that "Database Change Notification is a feature that enables client applications to register queries with the database and receive notifications in response to DML or DDL changes on the objects associated with the queries. The notifications are published by the database when the DML or DDL transaction commits."

AJAX is shorthand for asynchronous Javascript™ and XML. Wikipedia explains that "AJAX ... is a group of interrelated web development techniques used on the client-side to create interactive web applications. With AJAX, web applications can retrieve data from the server asynchronously in the background without interfering with the display and behavior of the existing page. The use of AJAX techniques has led to an increase in interactive or dynamic interfaces on web pages... Despite the name, the use of Javascript™ or XML is not actually required, nor do the request need to be asynchronous." Moreover, Wikipedia explains that some drawbacks of AJAX are that "[t]he same origin policy prevents some AJAX techniques from being used across domains, although the W3C has a draft of the XMLHttpRequest object that would enable this functionality."

The following presents a simplified summary of the disclosure in order to provide a basic understanding of some aspects. It is not intended to identify key or critical elements of the invention or to delineate the scope of the invention. The following summary merely presents some concepts of the disclosure in a simplified form as a prelude to the more detailed description provided below.

In one embodiment in accordance with aspects of the disclosure, a method for outputting a widget in response to receiving a widget identifier is disclosed. The widget may be configured to communicate with a secure database of a financial institution. The method may include the steps of: determining that the widget identifier is in the mapping table, retrieving appropriate data from the properties file and secure database; and generating/transmitting presentation code corresponding to the desired widget.

In another embodiment in accordance with aspects of the disclosure, an apparatus is disclosed comprising a computer processor, memory, and/or an interface. In an alternate embodiment the computer memory may be wholly or partially located in a data storage system.

One skilled in the art will appreciate that one or more of the aforementioned methods and features may be embodied as computer-executable instructions stored on a tangible computer-readable medium and executed by a processor.

Embodiments of the present invention will now be described by way of example only, with reference to the accompanying figures in which like reference numerals indicate similar elements and in which:
Figure 1 illustrates a schematic diagram of a general-purpose digital computing environment in which various aspects of the disclosure may be implemented;
Figure 2 illustrates one embodiment of a system in accordance with aspects of the disclosure;
Figure 3 is a flowchart illustrating one embodiment of a method in accordance with aspects of the disclosure; and
Figure 4 illustrates an exemplary properties file in accordance with aspects of the disclosure.

In accordance with various aspects of the disclosure, systems and methods are illustrated involving web applications running on a server accessible from the Internet. The server (or plurality of servers) may provide a third-party website with access to functionality accessible only accessible through a secure system of record. Aspects of the disclosure relate to dynamic updates of web applications/pages on third-party websites using an AJAX framework. The system may use properties files, business logic, and mapping table to facilitate, *inter alia,* cross-domain communication involving the widget and the web application.

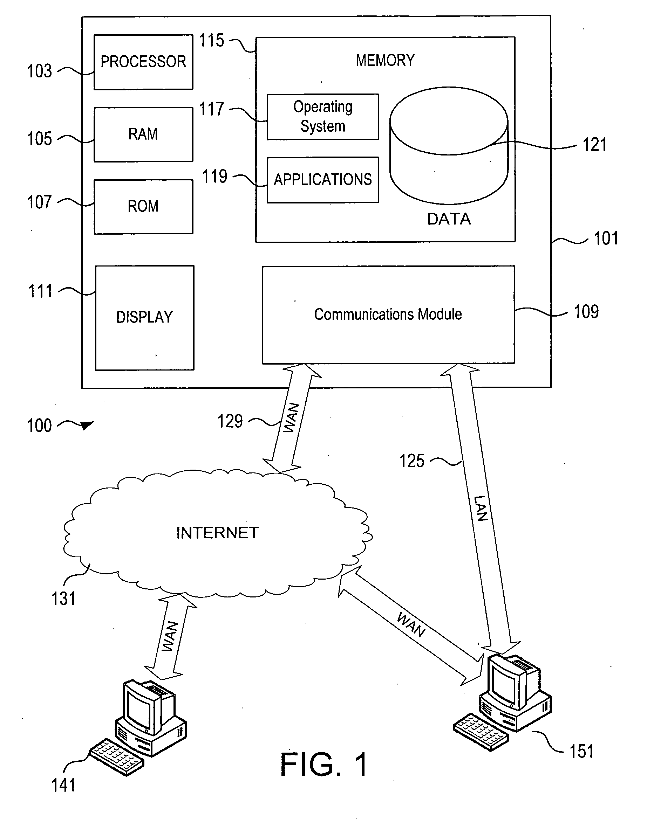

FIG. 1 illustrates an example of a suitable computing system environment 100 that may be used according to one or more illustrative embodiments of the invention. The computing system environment 100 is only one example of a suitable computing environment and is not intended to suggest any limitation as to the scope of use or functionality of the invention. The computing system environment 100 should not be interpreted as having any dependency or requirement relating to any one or combination of components illustrated in the computing system environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

Aspects of the invention may be described in the general context of computer-executable instructions, such as program modules, being executed by a computer. Generally, program modules include routines, programs, objects, components, data structures, etc. that perform particular tasks or implement particular abstract data types. Aspects of the invention may also be practiced in distributed computing environments where tasks are performed by remote processing devices that are linked through a communications network. In a distributed computing environment, program modules may be located in both local and remote computer storage media including memory storage devices.

With reference to Figure 1, the computing system environment 100 may include a computing device 101 having a processor 103 for controlling overall operation of the computing device 101 and its associated components, including RAM 105, ROM 107, communications module 109, and memory 115. Computing device 101 typically includes a variety of computer readable media. Computer readable media may be any available media that may be accessed by computing device 101 and include both volatile and nonvolatile media, removable and non-removable media. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, random access memory (RAM), read only memory (ROM), electronically erasable programmable read only memory (EEPROM), flash memory or other memory technology, CD-ROM, digital versatile disks (DVD) or other optical disk storage, magnetic cassettes, magnetic tape, magnetic disk storage or other magnetic storage devices, or any other medium that can be used to store the desired information and that can be accessed by computing device 101. Communication media typically embodies computer readable instructions, data structures, program modules or other data in a modulated data signal such as a carrier wave or other transport mechanism and includes any information delivery media. Modulated data signal is a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media. Although not shown, RAM 105 may include one or more are applications representing the application data stored in RAM memory 105 while the computing device is on and corresponding software applications (e.g., software tasks), are running on the computing device 101.

Communications module 109 may include a microphone, keypad, touch screen, and/or stylus through which a user of computing device 101 may provide input, and may also include one or more of a speaker for providing audio output and a video display device 111 for providing textual, audiovisual and/or graphical output. Software may be stored within memory 115 and/or storage to provide instructions to processor 103 for enabling computing device 101 to perform various functions. For example, memory 115 may store software used by the computing device 101, such as an operating system 117, application programs 119, and a data store 121. Alternatively, some or all of the computer executable instructions for computing device 101 may be embodied in hardware or firmware (not shown). As described in detail below, the data store 121 (e.g., a secure database) may provide centralized storage of account information and account holder information for the entire business, allowing interoperability between different elements of the business-residing at different physical locations. In some embodiments, the data store 121 may be physically located external to memory 115. For example, the data store 121 may be an enterprise database located at computing device 151.

Computing device 101 may operate in a networked environment supporting connections to one or more remote computing devices, such as computing devices 141 and 151. The computing devices 141 and 151 may be personal computing devices or web/application servers that include many or all of the elements described above relative to the computing device 101. The network connections depicted in Figure 1 include a local area network (LAN) 125 and a wide area network (WAN) 129, but may also include other networks. When used in a LAN networking environment, computing device 101 is connected to the LAN 125 through a network interface or adapter in the communications module 109. When used in a WAN networking environment, the server 101 may include a modem in the communications module 109 or other means for establishing communications over the WAN 129, such as the Internet 131. It will be appreciated that the network connections shown are illustrative and other means of establishing a communications link between the computing devices may be used. The existence of any of various well-known protocols such as TCP/IP, Ethernet, FTP, HTTP and the like is presumed, and the system can be operated in a client-server configuration to permit a user to retrieve web pages from a web-based server. Any of various conventional web browsers can be used to display and manipulate data on web pages.

Additionally, an application program 119 used by the computing device 101 according to an illustrative embodiment of the invention may include computer executable instructions for invoking user functionality related to communication, such as email, short message service (SMS), and voice input and speech recognition applications.

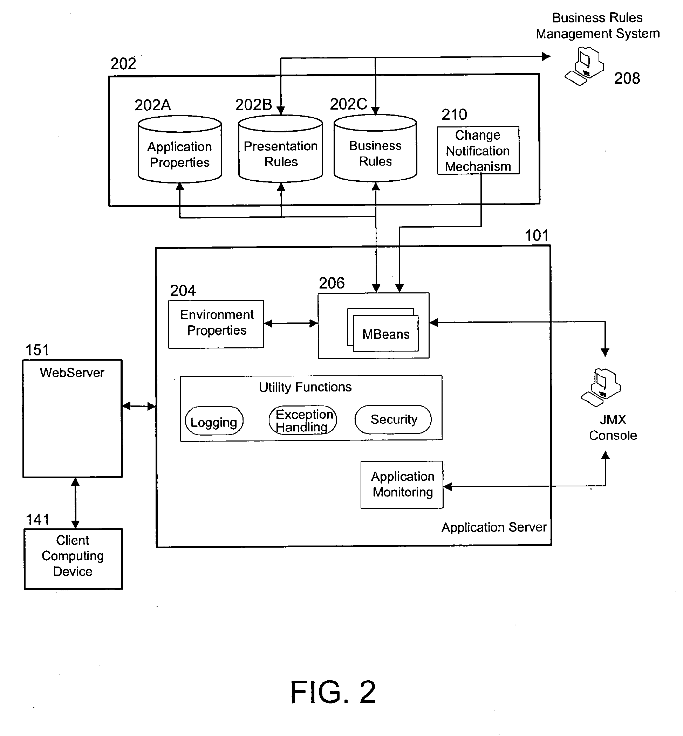

Figure 2 illustrates one embodiment of a system in accordance with aspects of the disclosure. A client computing device 141 may communicate with a third-party webserver 151 that in turn may communicate with an application server 101 on a different Internet domain. The client computing device 141 may include a display for showing a user the graphical user of the application. As such the application server may include a display interface configured to send a graphical user interface to the display device. The display interface may construct the graphical user interface corresponding to the application by using the business rules (or the modified business rules).

The application server 101 may access data (e.g., application properties, presentation rules, business rules, etc.) stored on a data storage system 202 (e.g., a secure database system). One skilled in the art will appreciate that although various components in Figure 2 are visually depicted as being located in a particular device, the disclosure contemplates one or more components being located in a different device, a single device, or being omitted. For example, in one embodiment, the data storage system 202 may be located inside the application server 101, or one or more components from data storage system 202 and application server 101 may be located (or co-located) in other blocks of Figure 2.

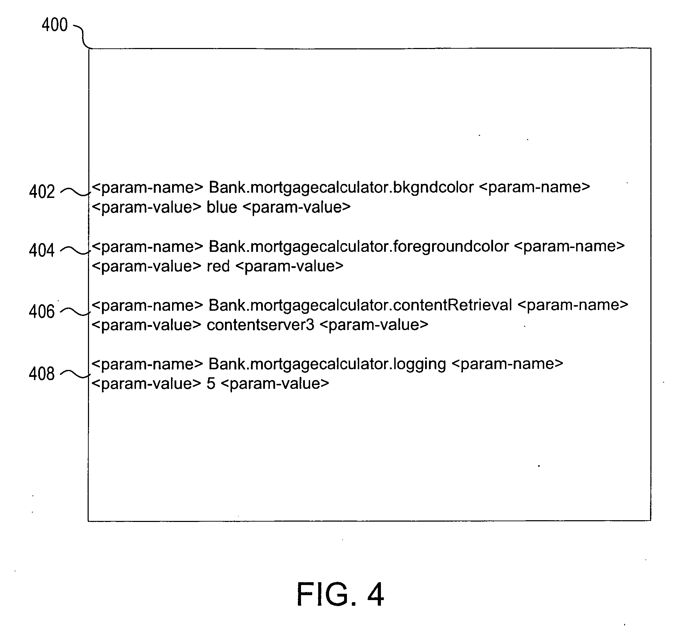

The system of Figure 2 may include a data storage system 202 configured to hold data for use by one or more applications executing in an application server 101. The data storage system 202 may store data including at least one or more of the following: application properties 202A (e.g., mapping table), presentation rules 202B (e.g., properties files), and/or business rules 202C (e.g., business logic). The terms business rules and business logic may be used interchangeably in this disclosure. Likewise, the terms presentation rules and properties files may be used interchangeably in this disclosure. Examples of illustrative data stored in the data storage system 202 are depicted in Figure 4, which is described in further detail below. The data storage system 202 may include computer memory (e.g., tangible computer-readable medium) for storing the one or more business rules (e.g., first business rule, second business rule, etc.) Moreover, the data storage system 202 may store a mapping table, properties files (e.g., presentation rules 202B), business logic (e.g., business rules 202C), and other data such as computer-executable instructions. In addition, a business rules management system 208 (BRMS) may be provided to assist in creating, modifying and/or maintaining the various data stored in the data storage system 202. The BRMS may provide a user-friendly graphical user interface (GUI) to allow business users with little to no computer programming (and webpage authoring) experience to create, modify, and maintain the presentation and configuration of an online application (e.g., a website) running with the assistance of a virtual machine.

The data store 202 (e.g., secure database system) may further include a change notification mechanism 210. The change notification mechanism may provide notifications of modification of data (e.g., application properties 202A, presentation rules 202B, business rules 202C, etc.) The notification may take the form of, for example in one embodiment, an alert over an IRQ (interrupt request) line. In another embodiment, the notification may be software-implemented using the well-documented "observer" design pattern where a "subject" and an "observer" are loosely coupled, and the subject provides notification to an observer when the subject changes state. One skilled in the art will appreciate that other configurations or design patterns are known in the art and may be used to provide notifications of modifications (e.g., state changes) of data, such as polling techniques, push techniques, and subject-observer implementations. In addition, the application server 101 may contain an interface to the change notification mechanism 210 so as to enable the receipt of notifications. For example, the application server 101 may include an instantiation of an "observer" configured to obtain notifications of business rule modifications from a "subject" in the data storage system 202.

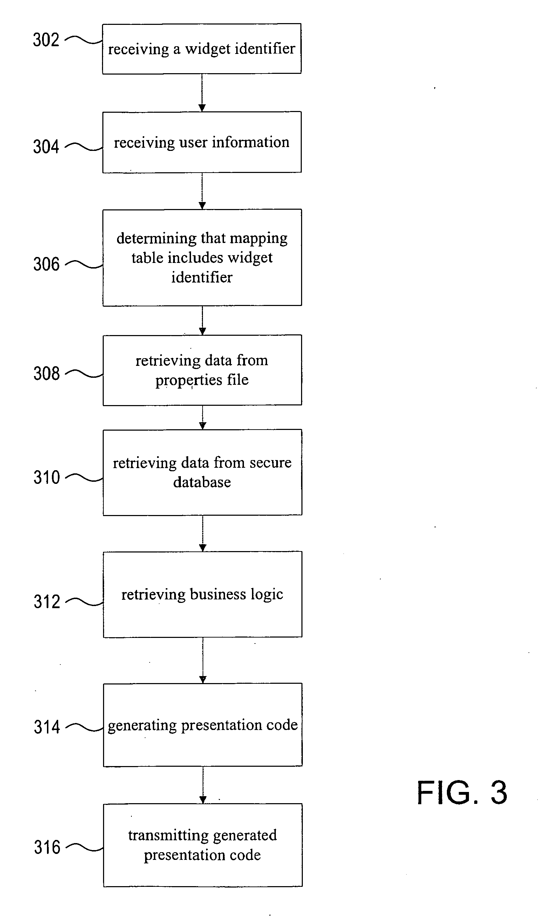

In accordance with various aspects of the disclosure, an application server 101 might not rely on a virtual machine to execute computer-executable instructions. In other embodiments, the application server 101 may include a virtual machine 206 (e.g., a Java™ virtual machine or provide a JRE™) configured to use a processor (e.g., Intel® microprocessor, AMD® microprocessor, multi-core processor, special-purpose processor, etc.) to execute computer-executable instructions. These instructions may include bytecode configured to be executed by the virtual machine to cause the system of Figure 2 to perform one or more steps identified in Figure 3 (and throughout this disclosure). The virtual machine 206 may include managed beans (mBeans™) to assist in managing resources (e.g., environment properties file(s) 204, application properties, etc.) and/or performing one or more of the aforementioned steps. mBeans™ are well-known in the art and may be used in conjunction with JMX (e.g., a JMX console) to assist in monitoring aspects of the one or more applications running on the virtual machine 206.

In accordance with various aspects of the disclosure, the virtual machine 206 may also include a rules control mechanism configured to permit an application running on the virtual machine to access a first set of business rules, while concurrently restricting the application from accessing a second set of business rules. Meanwhile, the rules control mechanism may permit a second application also running on the virtual machine 206 to access the second set of business rules, but restrict that application's access to the first set of business rules. One of skill in the art will recognize that at least one benefit of a system with a virtual machine 206 with the rules control mechanism is the ability to restrict visibility of properties (e.g., business rules, presentation rules, environment properties 204, etc.) at the level of the application. For example, different applications may then have the same names for properties without conflict. Therefore, interchangeability of underlying vendor products and future porting are greatly enhanced and simplified. In one embodiment in accordance with the disclosure, the rules control mechanism may be implemented using mBeans™ (see Ref. 206 in Figure 2). In another embodiment in accordance with the disclosure, the rules control mechanism may be implemented through computer-executable instructions stored on a tangible computer-readable medium of the application server 101 and executed by the virtual machine 206.

In addition, the system of Figure 2 may include utility functionality to assist in the dynamic configuration of properties. For example, a logging module may be included to record the login of the user that edits a property value in a properties file and the date/time when the modification occurred (e.g., by populating "modified_by" and "modified_date" fields in a log table). The logged information may provide, *inter alia,* an audit trail for modifications to business rules, presentation rules, application properties, environment properties, etc. In another embodiment, the logging module may provide the ability to designate the level of detail to record in application logs. For example, a logging level of "5" may indicate that all error messages and warning messages generated by the application should be recorded in a log file. (See Figure 4, ref. 408). In addition, modules for other utility functions (e.g., exception handling module and security module in Figure 2) may be provided to assist application developers and testers in handling exceptions and security. For example, a security module may provide information about what application developers and/or business users may modify which properties. At least one benefit of a security module is that it may prevent lay business users from accessing and mistakenly modifying a property value that could cause the entire system to crash (e.g., generate a fatal error message or other undesirable behavior.)

Figure 3 is a flowchart illustrating one embodiment of a method in accordance with aspects of the disclosure. One or more aspects of the method may be implemented using a system (e.g., the system illustrated in Figure 2.) In step 302, an electronic apparatus (e.g., application server 101) may receive a widget identifier from a remotely located device (e.g., user computing device 141 executing javascript code transmitted from a third-party webserver 151). A widget identifier may be a string value (e.g., "mortgageCalculator") descriptive of the functionality of a widget. In one example, a widget may comprise a mortgage calculator. The widget may comprise javascript code configured to be executed on a client's web browser on a remotely located electronic device (e.g., user computing device 141). Alternatively, the widget may comprise programming code of a different type that can execute on the user computing device 141.

In optional step 304, the electronic apparatus may receive user information. The user information may be transmitted to the electronic apparatus from a webpage remotely located on the user computing device 141. The webpage may have been downloaded from a third-party webserver (e.g., server 151). The user information may provide information such as the user's name, login, preferences, status, etc. For example, a webpage may include, *inter alia,* a widget identifier for a mortgage calculator from a particular financial institution. The webpage may also securely include information about the webpage user, such as the user's login with the financial institution. Such user information may be used to further customize the widget presented to the user on the webpage. One skilled in the art, after review of the entirety disclosed herein, will appreciate that not every embodiment of the disclosure will include optional step 304 because, among other things, a user and/or financial institution may not wish to put a customer's user information at risk. Nevertheless, in such cases where security is not an overriding concern, information about a user may be shared with the electronic apparatus in generating a widget for the webpage (or web application).

In step 306, the electronic apparatus 101 may determine whether the mapping table (e.g., stored in data storage 202) includes the widget identifier. The widget mapping table may serve as a mapping between a widget identifier and the resources associated with the widget. For example, a mortgage calculator widget may be identified with a widget identifier of "mcalc", however, the properties files, business logic, and/or other data stored on the electronic apparatus may not be named using an obscure widget identifier. Rather, the widget mapping table may be used to associate the appropriate resources with the possibly arbitrary widget identifier. In some instances the mapping table may be implemented in a database table (e.g., SQL table with an entry for each widget identifier). Alternatively, the mapping table may be implemented as an electronic file. In step 306, the appropriate resources are identified once the widget identifier is found in the mapping table. If the identifier is not found, an error message may be displayed to the user or thrown, but suppressed. In addition, one of skill in the art, after review of the entirety disclosed herein and incorporated herein by reference, will appreciate that the entries in the mapping table may be dynamically updated using one or more of the features of system in Figure 2, including but not limited to the change notification mechanism 210.

In step 308, the electronic apparatus 101 may retrieve data from a properties file associated with the widget identifier. The data retrieved from the properties file may include, but is not limited to, background color, foreground color, logging level, and content retrieval server identification. Background color and foreground color are examples of information about the graphical composition of the widget. Figure 4 illustrates one example of a properties file stored at data store 202 in accordance with various aspects of the disclosure. Figure 4 is discussed in greater detail below. One skilled in the art after review of the entirety disclosed herein, including that which is incorporated by reference, will appreciate that FTL files may also serve as properties files.

In optional step 310, the electronic apparatus 101 may retrieve data from a secure database 121. As explained in connection with step 304, in some embodiments, it may be undesirable to access user data in a secure database (e.g., a system of record) when, for example, security is a critical issue. In embodiments where retrieving user data from the secure database is permissible, user information received in step 304 may be used to obtain a more comprehensive assessment of the user. For example, the user's basic user information may be used to obtain greater information stored about the user in the secure database. In some embodiments, the user information may be as generic as the type of web browser the user is using.

In step 312, the electronic apparatus 101 may retrieve business logic corresponding to the widget identifier. The widget's business logic may be stored in data storage 202. The business logic of a widget may include programming code (e.g., javascript) that controls how the widget functions and operates. For example, a mortgage calculator widget may access memory to determine the current loan interest rate and perform mathematical calculations on that interest rate. The business logic underlying the calculations may enable a user to enter information and receive results.

In step 314, the electronic apparatus 101 may generate presentation code (e.g., text formatted in HTML, javascript, etc.) corresponding to the widget by, *inter alia,* executing the business logic corresponding to the widget identifier. In some examples, the retrieved data from step 308 and retrieved data from step 310 may also be used in generating the presentation code. For example, the business logic may read the background color value from a properties file to determine what color to render the background of the widget. Likewise, a contentRetrieval value may be read from a properties file, in one example, to determine what text to display for the widget. In Japan the text may be displayed in kanji script, while in Germany the text may be displayed in the German language. In another example, user information, such as the user's first name, may be incorporated into the widget display to customize the greeting for a user.

Finally in step 316, the presentation code generated in step 314 may be transmitted to the user computing device 141 remotely located from the application server 101. An communications module 109 (e.g., interface) may assist in sending the generated presentation code to remote electronic device 141. When the presentation code is received at computing system 141, the presentation code (e.g., HTML snippet) may be dynamically inserted into a webpage (or web application) at a predetermined marker. In the case of HTML webpages, the predetermined marker may be a "<div>" tag with the widget identifier as the value of the tag name. Using the document object model of the HTML webpage, the computing system 141 may insert on-the-fly the widget's presentation code at the position of the predetermined marker. Although the display widget is from the application server 101, the webpage may be from a computer server 151 on a completely different Internet domain. As such, the application server 101 may universally provide its widget to others on the Internet to embed (or configure to behave as a "pop-up") in their existing webpages.

Referring to Figure 4, an illustrative properties file 400 in accordance with aspects of the disclosure is shown. The contents of the properties file may adhere to a dot-delimited naming convention to permit the rules to be grouped. For example, property values related to a mortgage calculator widget belonging to "Bank" may include rules 402, 404, 406, 408. At least one benefit of such a naming convention is that, in some example, the rules control mechanism in a virtual machine 206 may efficiently permit or restrict an application's access to properties/parameters accordingly.

Furthermore, the values in the illustrative properties file 400 of Figure 4 may assist in generating the widget's presentation code. For example, property-value pair 406 may direct the widget in content retrieval. In particular, value 406 may direct the application server 101 to retrieve the content for its widget display from the "contentserver2" content server. In another example, the property-value pair 408 may include a value indicating log level. A level "5" logging setting may mean that every warning and error gets displayed. Meanwhile, the values for background color (see 402) and foreground color (see 404) may be used in generating the presentation code that will determine the look and feel of the widget displayed on the user's computer screen. One skilled in the art will appreciate that properties file may be stored in a file format 400 or other format (e.g., in a SQL table in a relational database, etc.) on the data storage system 202.

Although not required, one of ordinary skill in the art will appreciate that various aspects described herein may be embodied as a method, a data processing system, or as a computer-readable medium storing computer-executable instructions. Aspects of the invention have been described in terms of illustrative embodiments thereof. Numerous other embodiments, modifications and variations within the scope and spirit of the appended claims will occur to persons of ordinary skill in the art from a review of this disclosure. For example, the disclosure contemplates an application server 101 that executes compiled computer-readable instructions and does not rely on a virtual machine 206 as depicted in Figure 2. In other words, various embodiments of the claimed invention may operate without necessitating a virtual machine 206. In another example, one of ordinary skill in the art will appreciate that the steps illustrated in the illustrative figures may be performed in other than the recited order, and that one or more steps illustrated may be optional in accordance with aspects of the disclosure. In addition, the steps described herein may be performed using a processor executing computer-executable instructions stored on a computer-readable medium. The processor may also be in communication with a display screen for outputting the appropriate information in accordance with aspects of the invention.

## Claims

1. An electronic apparatus for outputting a widget in response to receiving a widget identifier, where the widget is configured to communicate with a secure database of a financial institution, the apparatus comprising:
an electronic processor;
a tangible computer-readable medium storing:
a mapping table comprising a plurality of widget identifiers,
a properties file associated with the widget identifier, and
business logic corresponding to the widget identifier; and
the tangible computer-readable medium further storing computer-executable instructions that when executed by the processor cause the apparatus to perform steps comprising:
determining that the mapping table includes the widget identifier;
retrieving data from the properties file associated with the widget identifier;
retrieving user data from the secure database;
generating presentation code of the widget, by executing the business logic with the processor, using at least the retrieved data from the properties file and the retrieved user data from the secure database; and
transmitting the generated presentation code.

2. The apparatus of claim 1, where the widget comprises a mortgage calculator.

3. The apparatus of claim 1, where the widget comprises javascript code configured to be executed on an electronic device located remotely from the electronic apparatus.

4. The apparatus of claim 1, where the widget identifier received at the apparatus was transmitted using javascript executing on an electronic device located remotely from the electronic apparatus, optionally where javascript executing on the electronic device was transmitted from a third-party webserver, where the third-party webserver is located on a different domain than the electronic apparatus, and optionally where the widget identifier is a string value descriptive of functionality of the widget.

5. The apparatus of claim 1, where the presentation code generated is formatted in hypertext markup language.

6. The apparatus of claim 1, where the properties file is a FTL file.

7. The apparatus of claim 1, further comprising:
an interface configured to send at least the generated presentation code to the electronic device locate remotely, where the generated presentation code is in hypertext markup language.

8. A method, comprising:
storing a mapping table on a tangible computer-readable medium;
storing at least one properties file on the tangible computer-readable medium, where the at least one properties file is associated with a widget;
storing business logic on the tangible computer-readable medium, where the business logic corresponds to the widget;
receiving a widget identifier associated with the widget;
determining, using a processor in communication with the tangible computer-readable medium, that the widget identifier is found in the mapping table, where the mapping table stores a plurality of widget identifiers;
retrieving data from a properties file associated with the widget identifier;
executing business logic corresponding to the widget identifier, using the processor, to generate presentation code corresponding to the widget; and
transmitting the generated presentation code to a remote system.

9. The method of claim 8, where the presentation code corresponds to a mortgage calculator widget, and optionally where the remote system positions the mortgage calculator widget on a display based on a predetermined marker.

10. The method of claim 8, where the executing business logic steps includes using the data retrieved from the properties file associated with the widget identifier to generate the presentation code, and optionally where the data retrieved from the properties file includes background color and foreground color.

11. The method of claim 8, where the at least one properties file comprises information about the graphical composition of the widget.

12. The method of claim 8, where the presentation code is formatted in hypertext markup language.

13. The method of claim 8, where the determining, retrieving, and executing steps are performed by a processor of a computer server accessible over the Internet, and optionally further comprising:
receiving, at the remote system, the generated presentation code; and
dynamically inserting the presentation code into a webpage at a predetermined marker using asynchronous javascript, where the webpage was received from a third-party webserver located on a different domain than the computer server.

14. A tangible computer-readable medium comprising computer-executable instructions that when executed cause an apparatus to perform steps comprising:
receiving a widget identifier and user information transmitted from a webpage remotely located on an electronic device, where the webpage was downloaded to the electronic device from a third-party webserver;
retrieving data from a properties file associated with the widget identifier, where the data from the properties file comprises widget color information;
retrieving business logic corresponding to the widget identifier;
generating presentation code using at least the retrieved business logic and data from the properties file and the user information; and
transmitting the generated presentation code to the electronic device.

15. The tangible computer-readable medium of claim 14, where the presentation code, when executed on the electronic device, displays a mortgage calculator widget.
